(19) Europäisches Patentamt
European Patent Office
Office européen des brevets

(11) Publication number: **0 545 368 A1**

(12) **EUROPEAN PATENT APPLICATION**

(21) Application number: **92120500.1**

(22) Date of filing: **01.12.92**

(51) Int. Cl.5: **B32B 25/14**, B32B 25/04, C08J 5/12

(30) Priority: **04.12.91 JP 348246/91**

(43) Date of publication of application: **09.06.93 Bulletin 93/23**

(84) Designated Contracting States: **DE IT**

(71) Applicant: **NIPPON ZEON CO., LTD.**
**6-1, 2-chome, Marunouchi, Chiyoda-ku**
**Tokyo(JP)**

(72) Inventor: **Akio, Maeda**
**944, Ogura, Saiwai-ku**
**Kawasaki-shi, Kanagawa-ken(JP)**
Inventor: **Hirokatsu, Seya**
**2-181, Tode Honcho, Saiwai-ku**
**Kawasaki-shi, Kanagawa-ken(JP)**

(74) Representative: **Kraus, Walter, Dr. et al**
**Patentanwälte Kraus, Weisert & Partner**
**Thomas-Wimmer-Ring 15**
**W-8000 München 22 (DE)**

# (54) Process for making fluorine-containing rubber laminates and the rubber laminates produced thereby.

(57) A process for making a fluorine-containing rubber laminate which comprises, in preparing a laminate composed of a fluorine-containing rubber layer and another layer of a rubber selected from the group consisting of epichlorohydrin rubber, acrylonitrile-butadiene rubber, hydrogenated acrylonitrile-butadiene rubber, acrylic rubber and polyblend, laminating the two rubber layers with a phosphonium salt caused to be present therebetween, said phosphonium salt being expressed by the formula below,

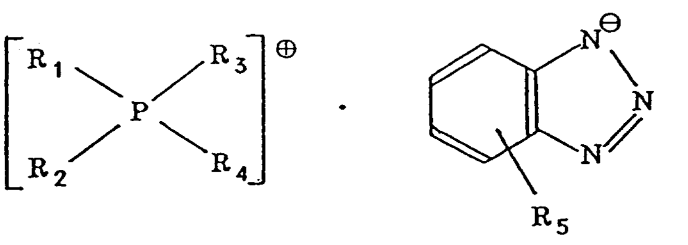

(in which

$R_1$, $R_2$, $R_3$ and $R_4$ are optionally substituted $C_1$-$C_{20}$ hydrocarbon residues, up to three of said $R_1$, $R_2$, $R_3$ and $R_4$ may be primary, secondary or tertiary amino or fluoroalkyl groups, and $R_5$ is hydrogen or a $C_1$-$C_{20}$ alkyl group)

heating and bonding the laminate; and rubber laminates prepared by the above process.

EP 0 545 368 A1

The present invention relates to laminates composed of fluorine-containing rubber and another rubber. More specifically, the invention relates to a process for making a rubber laminate, which comprises laminating the rubber layers while placing a specific phosphonium salt therebetween, heating them to vulcanize and bond the layers to form a rubber laminate; and also to the rubber laminates exhibiting excellent bonding strength which are obtained through the same process.

Under the current circumstances relating to petroleum oil, gasohol formed by mixing gasoline with alcohol is gathering attention as an automobile fuel. Gasohol, however, exhibits a stronger action to swell rubber compared to conventional gasoline. Therefore, acrylonitrile-butadiene rubber, a known oil-resistant rubber, cannot be used as hoses for gasohol, as it is swollen to cause permeation of the fuel.

As a rubber material resistant to this fuel, a termary fluorine-containing rubber is known. Fluorine-containing rubbers exhibit excellent performance in resistance properties to heat, oil, solvent and chemicals. In particular, those of ternary composition are known for their excellent gasohol resistance. However, they have poor low temperature resistance and are expensive. Therefore, for fuel hoses they are normally used as an inner thin layer of double-layered structure, with an outer layer formed of a cheap rubber excelling in low temperature resistance and weather-ability, e.g., an epichlorohydrin rubber. The difficulty with this type of double-layered hoses is, however, that the ternary fluorine-containing rubber layer exhibits poor adherability to the epichlorohydrine rubber layer. To overcome this difficulty, use of an adhesive such as a rubber paste was considered, but such pastes were found to exhibit insufficient heat resistance. With the view to improve this defect, various studies have been made on vulcanization system of epichlorohydrin rubber and a number of proposals were made (Japan Kokai No. 11180/89, 133734/89, 66750/91, etc.).

In production of a rubber laminate composed of fluorine-containing rubber and epichlorohydrin rubber, we found previously that excellent adherability could be obtained when an epichlorohydrin rubber composition is vulcanization-adhered with fluorine-containing rubber, said rubber composition being an epichlorohydrin rubber blended with a metal oxide and a phosphonium salt which is expressed by the formula,

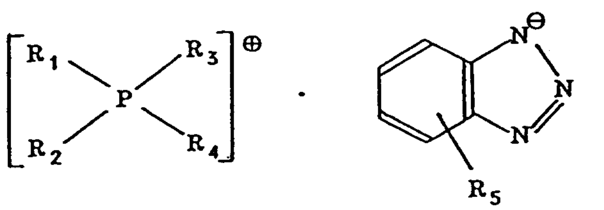 (I)

(in which

$R_1$, $R_2$, $R_3$ and $R_4$ are optionally substituted $C_1$-$C_{20}$ hydrocarbon residues, up to three of said $R_1$, $R_2$, $R_3$ and $R_4$ may be primary, secondary or tertiary amino or fluoroalkyl groups, and $R_5$ is hydrogen or a $C_1$-$C_{20}$ alkyl group)

(Japan Kokai 133734/89). The above method does improve the adherability, but the product shows a tendency that scorching of the epichlorohydrin rubber is accelerated by the phosphonium salt of formula (I), which gives rise to a production problem that the vulcanization reaction advances exceedingly during the kneading in an extruder, to interfere with satisfactory shaping of the rubber.

Again, when the fluorine-containing rubber is one of ternary composition, the adherability is poor and shaping of the laminate is difficult.

An object of the present invention is to provide a laminate composed of a fluorine-containing rubber and another rubber, which is free of the above defects and still exhibits excellent adhesion.

As the result of concentrative studies, we discovered that the use of the phosphonium salt of above formula (I), not as mixed with the rubber component but as placed between the rubber layers, results in good adhesion of not only epichlorohydrin rubber but also other rubbers, with fluorine-containing rubber, irrelevantly to the kind of the vulcanization system.

Thus, according to the present invention a process for making fluorine-containing rubber laminates is provided, which comprises, in preparation of a laminate composed of a fluorine-containing rubber layer and a layer of another rubber, laminating the rubber layers while placing the phosphonium salt of formula (I) therebetween, and heating them to adhere the two layers. Also provided are the rubber laminates exhibiting excellent adhesion which are prepared by the above process.

The fluorine-containing rubber used in the present invention encompasses the copolymer rubbers of fluorine-containing unsaturated monomers such as vinylidene fluoride, hexafluoropropene, tetrafluoroethylene, pentafluoropropene, trifluoroethylene, trifluorochloroethylene, vinyl fluoride, perfluoromethylvinylether, etc., with other monomers which are copolymerizable therewith. Of those

copolymers, vinylidene fluoride-hexafluoropropene-tetrafluoroethylene terpolymer rubbers are particularly preferred in respect of gasohol resistance.

In the present invention, vulcanising agent to be used in vulcanization system is subject to no critical limitation. Any of known vulcanization systems such as those using polyols, organic peroxides or amines can be used.

As other rubbers usable in the invention, epichlorohydrin rubbers, acrylonitrile-butadiene rubbers (NBR), hydrogenated acrylonitrile-butadiene rubbers (HNBR), acrylic rubbers and polyblends (blends of acrylonitrile-butadiene rubbers with polyvinyl chloride) may be named. Depending on the properties required for each individual rubber laminate, a suitable rubber is selected from those above-named. Of those, epichlorohydrin rubbers are frequently used for laminates with fluorine-containing rubbers, because of their excellent resistance to low temperature and weatherability.

As epichlorohydrin rubbers, homopolymers of epichlorohydrin and copolymers of epichlorohydrin with other epoxides can be used. As specific examples, epichlorohydrin-alkylene oxide copolymer rubber, epichlorohydrin-allyl glycidyl ether copolymer rubber, epichlorohydrin-alkylene oxide-allyl glycidyl ether ternary copolymer rubber can be named. The composition of this ternary copolymer rubber is, when the alkylene oxide is ethylene oxide, such that epichlorohydrin occupies 35-98 mole%, ethylene oxide, 0 - 60 mol% and allyl glycidyl ether, 0 - 15 mole%. When the alkylene oxide is propylene oxide, or a blend of ethylene oxide and propylene oxide, epichlorohydrin ranges 10 - 60 mole%, alkylene oxide, 30 - 90 mole% and allyl glycidyl ether, 10 - 15 mole%. Within the above-specified ranges, a specific composition is suitably selected depending on the properties required of the intended laminate and the vulcanisation system to be used. While organic peroxide-, sulfur-, triazinethiol-, amine- and thioureavulcanization systems are useful, in many cases triazinethiol system is used because whereby obtained vulcanization products exhibit good heat resistance and permanent set property under compression.

As NBR, those readily commercially available ones of from low to very high nitrile content can be used. Vulcanization can be effected either in sulfur- or organic peroxide-using vulcanization system.

HNBR comprises those in which the butadiene units of NBR is hydrogenated, and those in which the butadiene units of acrylonitrile-butadiene-ethylenically unsaturated monomer is hydrogenated. Said ethylenically unsaturated monomer may be partially substituted with a non-conjugated diene such as vinyl norbornane, dicyclopentadiene or 1,4-hexadiene. These copolymer rubbers preferably have an iodine value of not higher than 120, for exhibiting sufficient heat resistance and sour gasoline resistance. In the vulcanization system, either sulfur or organic peroxides can be used as vulcanizing agent.

Acrylic rubbers can be obtained by copolymerizing alkyl acrylate, alkoxyalkyl acrylate, and other ethylenically unsaturated monomers or crosslinkable monomers which are copolymerizable with those acrylates. A vulcanization agent is suitably selected depending on the kind of the crosslinkable monomer in individual copolymer.

NBR of from low to very high nitrile content can be used for forming polyblends. As the other component, polyvinyl chloride (PVC), those having an average degree of polymerization ranging from 600 - 2000 can be used. When PVC of a degree of polymerization below 600 is used, the resultant polyblend exhibits insufficient ozone resistance. Whereas, when it exceeds 2000, the resultant polyblend is objectionably too hard. The blend ratio of NBR and PVC is suitably selected in accordance with the performance required of individual polyblend, while generally used range is NBR 90 - 60 parts by weight and PVC, 10 - 40 parts by weight. The most frequently used is the blend of 70 parts by weight of NBR and 30 parts by weight of PVC. The method of blending is not critical. For example, dry-blend method (method of mixing NBR and PVC powder at a high temperature in a Bumbury's mixer or the like) or latex coprecipitation method (method of blending NBR and PVC in the state of latices, coagulating, drying and then heating the blend in an extruder, Bumbury's mixer or the like) can be adopted.

The phosphonium salt to be placed between the rubber layers according to the present invention is a compound represented by the earlier shown formula (I).

As examples of the hydrocarbon residues for which $R_1$, $R_2$, $R_3$ and $R_4$ stand, the following can be named: alkyl groups such as methyl, ethyl, butyl, ethylhexyl and dodecyl; cycloalkyl groups such as cyclohexyl; aryl groups such as phenyl, naphthyl, butylphenyl; and substituted aryl groups. Examples of secondary or tertiary amino groups include: methylamino, ethylamino, anilino, dimethylamino and diethylamino groups. Examples of fluoroalkyl groups include trifluoromethyl, tetrafluoropropyl and octafluoropentyl. As $R_5$, such alkyl groups as methyl, ethyl, butyl, ethylhexyl and dodecyl can be named for examples.

Specific examples of the compound of formula (I) include: tetrabutyl-, tetraoctyl-, methyltrioctyl-, butyltrioctyl-, phenyltributyl-, benzyltributyl-, benzyltricyclohexyl-, benzyltrioctyl-, butyltriphenyl-, octyltriphenyl-, benzyltriphenyl-, diphenyldi(diethylamino)-, phenylbenzyldi (dimethylamino)-,

trifluoromethylbenzyl- and tetrafluoropropyltrioctylphosphonium benzotriazolate or corresponding tolyltriazolates.

A rubber laminate of the present invention is prepared by a process as follows.

A fluorine-containing rubber and another rubber are separately kneaded in a roller mixer, Bumbury's mixer or the like, together with a vulcanizing agent and other additives as required for individual occasion such as vulcanization accelerator, reinforcing agent, filler, softening agent, plasticizing agent, antioxidant, etc., to form respective rubber compositions. Each of the compositions is shaped into a sheet or hose of an adequate thickness, and the two sheets or hoses are laminated in unvulcanized state, placing a phosphonium salt of the formula (I) between the two layers. As a means to place the phosphonium salt between the rubber layers, the salt may be dissolved in an organic solvent and applied or sprayed onto either of a single surface or both surfaces of the rubber layers facing with each other. When the salt is used in a form of solution, its concentration is preferably 5-20 % by weight. As the organic solvent, one which is capable of sufficiently dissolving the phosphonium salt and which is volatile is used. Specific examples of useful solvent include: ketones such as acetone and methyl ethyl ketone; alcohols such as methyl alcohol and ethyl alcohol; and hydrocarbons such as benzene, toluene and xylene. Then, so laminated two rubber layers are heated under pressure with a hot press or a vulcanizer to cause a vulcanizing reaction and effect vulcanization and adhesion. Preferred hot pressing conditions are: temperature, 140-200 °C; pressure, 20 - 150 kg/cm$^2$; and time, 5 - 60 minutes. When a vulcanizer is used, the preferred conditions are: temperature, 130 - 180 °C; pressure, 1.8 - 9.1 kg/cm$^2$ and time, 20 - 120 minutes.

Hereafter the invention is explained more specifically, referring to working examples and controls, in which parts and percentages are by weight unless otherwise specified.

(1) Preparation of rubber laminates:

Fluorine-containing rubber compositions and compositions of various other rubbers were each kneaded with 6-inch open rolls and formed into a sheet of a uniform thickness of approximately 2 mm. Each sheet was cut into ribbons of 6 cm x 10 cm in size. The fluorine-containing rubber sheets were immersed in a methyl ethyl ketone solution of tetrabutylphosphonium benzotriazolate (10 %), and then air-dried for 30 minutes. Each of those fluorine-containing rubber sheets was laminated on each of the other rubber sheets, followed by 30 minutes' vulcanization and adhesion, as pressed with a pressure of 40 kg/cm$^2$ at 160 °C, to provide laminates. In that occasion, a piece of cellophane paper was inserted between each pair of the two rubber sheets at the part to be gripped with a chuck for the purpose of a peel test, to prevent adhesion of the two sheets at said part.

(2) Peel test

The test pieces which were prepared as above were subjected to a peel test following JIS-K6301, at a pull rate of 50 mm/min. to determine adhesive strength of each test piece.

<u>Example 1</u>

Following the prescriptions of Table 1, fluorine-containing rubber compositions (Blend Nos. 1-2) were formulated, and epichlorohydrin rubber compositions (Blend Nos. 3-6), following the prescriptions of Table 2. The compositions were each formed into a 2 mm-thick sheet. The fluorine-containing rubber sheet samples were prepared in duplicate, to provide a tetrabutylphosphonium benzotriazolate solution-treated group and an untreated group. Each of the fluorine-containing rubber sheet was laminated with one of the epichlorohydrin rubber sheets, pressed and heated to form a laminate. The adhesive strength of each laminate was measured by the peel test. The results are shown in Table 3.

In Table 3, the column under the heading of "present invention" shows the results of testing the laminates in which the tetrabutylphosphonium benzotriazolate solution-treated fluorine-containing rubber sheets were used. The column of "control" shows the results of testing the laminates using the untreated fluorine-containing rubber sheets.

TABLE 1

| Prescriptions of Fluorine-containing Rubber Compositions | | |
|---|---|---|
| Blend No. | 1 | 2 |
| Vulcanization system | polyol | amine |
| Technoflon TF-50 *1 | 100 | - |
| Technoflon TN-50 *2 | - | 100 |
| FEF carbon | 10 | 10 |
| MgO | 3 | 15 |
| $Ca(OH)_2$ | 6 | 0 |
| Diak #3 *3 | - | 3 |

*1 vinylidene fluoride-propylene hexafluorideethylene tetrafluoride copolymer (fluorine content 67 wt%; containing Technoflon $M_1$ & $M_2$; polyol-vulcanized type; manufactured by Monte Fluos Co.)
*2 vinylidene fluoride-propylene hexafluorideethylene tetrafluoride copolymer (fluorine content 67 wt%; amine-vulcanized type; manufactured by Monte Fluos Co.)
*3 N,N'-cinnamylidene-1,6-hexanediamine (manufactured by Shoden-Du Pont Co.)

TABLE 2

Prescriptions of Epichlorohydrin Rubber Compositions

| Blend No. | 3 | 4 | 5 | 6 |
|---|---|---|---|---|
| Vulcanization system | triazine | P.O. | sulfur | red lead -thiourea |
| Gechron 3102 *4 | 100 | 100 | 100 | |
| Gechron 2000 *5 | | | | 100 |
| Sorbitol monostearate *6 | 3 | 3 | - | - |
| Stearic acid | - | - | 1 | 1 |
| FEF carbon | 40 | 30 | 40 | 40 |
| ZnO | - | - | 1 | - |
| MgO | 3 | 10 | 5 | 5 |
| Ca(OH)2 | - | 5 | - | - |
| Zisnet F *7 | 1 | - | - | - |
| Santogard PVI *8 | 1 | - | - | - |
| Perhexa 2,5B *9 | - | 0.5 | - | - |
| TAIC *10 | - | 1.5 | - | - |
| Acrylic ester-ED *11 | - | 1.5 | - | - |
| Sulfur | - | - | 0.5 | - |
| Nocceler-TT *12 | - | - | 1.5 | - |
| Nocceler-CZ *13 | - | - | 1.5 | - |
| Revital Master $Pb_3O_4$ *14 | - | - | - | 5.25 |
| Revital Master 22 *15 | - | - | - | 1.20 |
| Nocrac *16 | 1 | 1 | 1 | 1 |

*4 epichlorohydrin-ethylene oxide-allyl glycidyl ether copolymer (manufactured by Nippon Zeon)

*5 epichlorohydrin-ethylene oxide copolymer (manufactured by Nippon Zeon)

*6 sorbitol monostearate

*7 2,4,6-trimercapto-s-triazine

*8 N-(cyclohexylthio) phthalimide (manufactured by Mitsubishi-Monsanto Kasei)

*9 2,5-dimethyl-2,5-di(t-butylperoxy) hexane (manufactured by Nihon Yushi)

*10 trimethylisocyanurate (manufactured by Nihon Kasei Co.)

*11 ethylene dimethacrylate (manufactured by Mitsubishi Rayon)

*12 tetramethylthiuram disulfide (manufactured by Ohuchi Shinko)

*13 N-cyclohexyl-2-benzothiazyl sulphenamide (manufactured by Ohuchi Shinko)

*14 $Pb_3O_4$ rubber master batch, content: 84 wt% (manufactured by Nippon Zeon)

*15 ethylene thiourea rubber master batch, content: 84 wt% (manufactured by Nippon Zeon)

*16 nickel dibutyldithiocarbamate (manufactured by Ohuchi Shinko)

TABLE 6

Test Result-2

| Run No. | Fluorine-containing rubber composition | | The other rubber composition | | Present invention | | Control | |
|---|---|---|---|---|---|---|---|---|
| | No. | vulcanization system | No. | rubber | peel strength | peel site | peel strength | peel site |
| 9 | 1 | polyol | 7 | AR | 8.1 | rubber | 2.2 | interface |
| 10 | | | 8 | AR | 10.9 | do. | 0 | do. |
| 11 | | | 9 | NBR | 8.3 | do. | 0 | do. |
| 12 | | | 10 | HNBR | 6.6 | do. | 0 | do. |
| 13 | | | 11 | polyblend | 7.7 | do. | 0.4 | do. |
| 14 | 2 | amine | 7 | AR | 10.2 | rubber | 0 | interface |
| 15 | | | 8 | AR | 9.7 | do. | 0 | do. |
| 16 | | | 9 | NBR | 7.0 | do. | 0 | do. |
| 17 | | | 10 | HNBR | 7.1 | do. | 0 | do. |
| 18 | | | 11 | polyblend | 7.5 | do. | 0.2 | do. |

(unit of peel strength: kgf/inch)

Example 2

Following the prescriptions of Table 4, acrylic rubber compositions (Blend Nos. 7 and 8) were formulated, and following those of Table 5, acrylonitrile-butadiene rubber and hydrogenated acrylonitrile-butadine rubber compositions (Blend Nos. 9 and 10) were formulated.

Two(2) mm-thick sheets were prepared from each of above compositions and the fluorine-containing rubber compositions as shown in Table 1, from which rubber laminates were prepared through same procedures as described in Example 1. The results of the peel test of those laminates are shown in Table 6. In the same table, the headings of the colums, "present invention" and "control" have the same meanings as those in Table 3.

TABLE 4

| Prescriptions of Acrylic Rubber Composition | | |
|---|---|---|
| Blend No. | 7 | 8 |
| Vulcanization system | ammonium salt | sulfur |
| Nipol AR 42W *17 | 100 | - |
| Nipol AR 72LF *18 | - | 100 |
| Stearic acid | 1 | 1 |
| MAF carbon | 60 | 60 |
| Vulnoc AB *19 | 1.3 | - |
| Sulfur | - | 0.3 |
| Nonseal SN-1 *20 | - | 3 |
| Nonseal TK-1 *21 | - | 0.5 |
| Naugard #445 *22 | 1 | 1 |

*17 acrylic rubber (manufactured by Nippon Zeon)
*18 same to the above
*19 ammonium benzoate (manufactured by Ohuchi Shinko)
*20 sodium stearate (manufactured by Nihon Yushi)
*21 potassium stearate (manufactured by Nihon Yushi)
*22 amine-containing antioxidant (manufactured by Shiraishi Calcium)

TABLE 5

Prescriptions of NBR and HNBR Compositions

| Blend No. | 9 | 10 | 11 |
|---|---|---|---|
| Rubber | NBR | HNBR | polyblend |
| Vulcanization system | sulfur | sulfur | P.O. |
| Nipol 1042 *23 | 100 | - | - |
| Zeptol 2020 *24 | - | 100 | - |
| Nipol DN508 *25 | - | - | 100 |
| Stearic acid | 1 | 1 | 1 |
| SRF carbon | 60 | 60 | 50 |
| ZnO | 5 | 5 | 5 |
| MgO | - | 5 | 15 |
| Sulfur | 0.5 | 0.5 | - |
| Nocceler TT | 1.5 | 1.5 | - |
| Nocceler CZ | 1.5 | - | - |
| Nocceler M *26 | - | 0.5 | - |
| Percumyl D-40 *27 | - | - | 3 |
| DOP *28 | 5 | - | - |
| Adekacizer C-8 *29 | - | 5 | - |
| Thiocol TP-95 *30 | - | - | 15 |
| Naugard #445 | 5 | 5 | 5 |

*23 acrylonitrile-butadiene copolymer (AN content: 33.5 wt%; manufactured by Nippon Zeon)

*24 hydrogenated acrylonitile-butadiene copolymer (AN content: 36 wt%; manufactured by Nippon Zeon)

*25 polyblend (NBR 70 parts and PVC 30 parts blend; manufactured by Nippon Zeon)

*26 2-mercaptobenzothiazol
(manufactured by Ohuchi Shinko)

*27 dicumyl peroxide
(manufactured by Nihon Yushi)

*28 dioctyl phthalate
(manufactured by Daihachi Chemical)

*29 tri-(2-ethylhexyl)trimellitic acid
(manufactured by Chemical)

*30 dibutoxyethoxyethylether
(manufactured by Daihachi Chemical)

TABLE 3

Test Result-1

| Run No. | Fluorine-containing rubber blend | | ECH rubber blend | | Present invention | | Control | |
|---|---|---|---|---|---|---|---|---|
| | No. | vulcanization system | No. | vulcanization system | peel strength | peel site | peel strength | peel site |
| 1 | 1 | polyol | 3 | triazine | 11.2 | rubber | 0 | interface |
| 2 | | | 4 | P.O. | 13.5 | do. | 2.1 | do. |
| 3 | | | 5 | sulfur | 7.2 | do. | 0 | do. |
| 4 | | | 6 | red lead | 8.1 | do. | 1.9 | do. |
| 5 | 2 | amine | 3 | triazine | 16.1 | rubber | 0 | interface |
| 6 | | | 4 | P.O. | 10.8 | do. | 0 | do. |
| 7 | | | 5 | sulfur | 10.8 | do. | 0 | do. |
| 8 | | | 6 | red lead | 10.8 | do. | 3.1 | do. |

(unit of peel strength: kgf/inch)

As seen in Tables 3 and 6, according to the present invention a fluorine-containing rubber layer and another rubber layer exhibit good mutual adhesion, irrespectively of the vulcanization system employed. The peeling condition of two rubber layers is interfacial destruction in the control runs, while it is rubber destruction in the laminates produced according to the present invention. In the peel test, the products of the present invention invariably exhibit excellent peel strength values of no less than 6 kg/inch.

Thus, according to the process of the present invention, laminates of strongly bonded fluorine-containing rubber layer and another rubber layer can be obtained as the result of presence of the phosphonium salt between the two rubber layers. Furthermore, the process of the present invention is highly advantageous for the laminate production, because it is sufficient to apply the phosphonium salt to a rubber layer surface or two surfaces only, which does not adversely affect vulcanization rate of rubber and which also is simple of operation.

**Claims**

1. A process for making a fluorine-containing rubber laminate, which comprises, in preparing a laminate composed of a fluorine-containing rubber layer and another layer of a rubber selected from the group consisting of epichlorohydrin rubber, acrylonitrile-butadiene rubber, hydrogenated acrylonitrile-butadiene rubber, acrylic rubber and polyblend, laminating the two rubber layers with a phosphonium salt caused to be present therebetween, said phosphonium salt being expressed by the formula below,

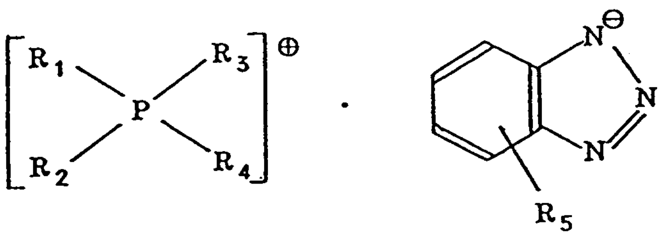

(in which
$R_1$, $R_2$, $R_3$ and $R_4$ are optionally substituted $C_1$-$C_{20}$ hydrocarbon residues, up to three of $R_1$, $R_2$ $R_3$ and $R_4$ may be primary, secondary or tertiary amino or fluoroalkyl groups, and $R_5$ is hydrogen or a $C_1$-$C_{20}$ alkyl group),
and heating and bonding the same.

2. A process for making a fluorine-containing rubber laminate according to Claim 1, which comprises applying an organic solvent solution of said phosphonium salt to at least one of the rubber layer surfaces and laminating the two rubber layers.

3. A process for making a fluorine-containing rubber laminate according to Claim 1, in which $R_1$, $R_2$, $R_3$ and $R_4$ are $C_1$-$C_5$ alkyl groups.

4. Fluorine-containing rubber laminates prepared by the process defined in any of Claims 1 to 3.

European Patent Office

# EUROPEAN SEARCH REPORT

Application Number

EP 92 12 0500

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | EP-A-0 303 244 (NIPPON ZEON CO.,LTD.)<br>* page 3, line 55 - line 58; claims 1,10 *<br>--- | 1-4 | B32B25/14<br>B32B25/04<br>C08J5/12 |
| A | EP-A-0 348 194 (NIPPON ZEON CO.,LTD.)<br>* page 3, line 49 - line 51; claims 1,6 *<br>--- | 1-4 | |
| A | EP-A-0 286 076 (NIPPON ZEON CO.,LTD.)<br>* page 3, line 52 - line 55; claims 1,11 *<br>----- | 1-4 | |

TECHNICAL FIELDS SEARCHED (Int. Cl.5)

B32B
C08J
C08K

The present search report has been drawn up for all claims

| Place of search | Date of completion of the search | Examiner |
|---|---|---|
| THE HAGUE | 25 FEBRUARY 1993 | PAMIES OLLE S. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document